# FASCICULE DE BREVET EUROPEEN

(11) **EP 3 641 361 B1**
(45) Date de publication et mention de la délivrance du brevet: **23.02.2022**
(21) Numéro de dépôt: 19215961.4
(22) Date de dépôt: 20.04.2018
(51) Int. Cl.: H04W 8/02, H04W 48/08, H04W 48/18, H04W 60/04

(54) **SÉCURISATION DU CHOIX DU RÉSEAU VISITÉ EN ITINÉRANCE**
SICHERUNG DER AUSWAHL DES BEIM ROAMING BESUCHTEN NETZES
SECURING OF THE CHOICE OF THE ROAMING NETWORK VISITED

(30) Priorité: 28.04.2017 FR 1753798
(43) Date de publication de la demande: 22.04.2020
(62) Demande divisionnaire de: 18725275.4
(73) Titulaire: ORANGE, 92130 Issy-les-Moulineaux (FR)
(72) Inventeur: BONNET, Cédric, 92326 CHATILLON (FR); EL MOUMOUHI, Sanaa, 92326 CHATILLON (FR)

(56) Documents cités:
- US-A1- 2007 281 694
- US-A1- 2015 256 993

## Description

### 1. Domaine de l'invention

La demande d'invention se situe dans le domaine des communications mobiles, et plus particulièrement dans le domaine de l'itinérance d'un abonné à l'étranger.

### 2. Etat de la technique antérieure

Les opérateurs mobiles possèdent des licences pour offrir leurs services dans des zones géographiques généralement limitées au territoire d'un pays, ou d'une partie d'un pays. Certains opérateurs de zones différentes peuvent néanmoins avoir des accords d'itinérance privilégiant mutuellement leurs abonnés respectifs.

Dans ce contexte, lorsqu'un abonné d'un opérateur A est en itinérance dans une zone couverte par un opérateur B et par un opérateur C, et qu'il existe un premier accord d'itinérance entre les opérateurs A et B, et un deuxième accord d'itinérance entre les opérateurs A et C, mais que l'opérateur A préfère le premier accord d'itinérance, l'objectif est de faire en sorte que l'abonné se connecte au réseau visité de l'opérateur B. A cette fin, un fichier de configuration est poussé dans la carte SIM du terminal de l'abonné. Ce fichier comprend la liste des réseaux préférés de l'opérateur A, y compris celui de l'opérateur B. C'est alors à l'initiative du terminal de choisir le réseau préféré, c'est-à-dire le réseau de l'opérateur B, et non celui de l'opérateur C, lorsqu'il est dans la zone commune à ces deux opérateurs.

La méthode adoptée pour pousser le fichier de configuration en question est basée sur les messages SMS. La carte SIM du terminal est mise à jour suite à la réception d'un message SMS. Afin d'empêcher un autre opérateur que l'opérateur A de mettre à jour la carte SIM, le SMS doit comprendre une clé de sécurité propre à la carte SIM. Ce SMS n'est émis par l'opérateur A que lorsqu'il détecte que son abonné est en itinérance. Il ne peut pas être émis à l'avance une fois pour toute, avant que son abonné ne sorte de sa zone, car les accords entre opérateurs sont modifiés très fréquemment, en fonction des volumes de trafic qu'ils échangent.

Cependant, certains opérateurs visités contournent ce mécanisme en détectant et bloquant le SMS de mise à jour. Le terminal de l'abonné ne reçoit plus la liste des réseaux d'opérateurs préférés, et sélectionne le réseau d'attachement sur la base d'autres critères, comme la puissance du signal d'une antenne relais, ce qui peut privilégier indument un réseau ne faisant pas partie de la liste. La publication de brevet US 2007/281694 divulgue un procédé de connexion d'un terminal lorsqu'il se trouve dans une zone en dehors du réseau domicile, où un message est envoyé au terminal avec une liste de réseaux préférés.

Un des buts de l'invention est de remédier à ces inconvénients de l'état de la technique.

### 3. Exposé de l'invention

L'invention vient améliorer la situation à l'aide d'un procédé de connexion d'un terminal hors de portée de son réseau domicile, à un réseau d'une zone visitée couverte par une pluralité de réseaux, le procédé comprenant:
- l'émission d'une requête relative à la connexion,
- la réception d'un message de réponse à la requête, comprenant une liste d'au moins un réseau de la pluralité, auquel doit se connecter en priorité le terminal,
- la déconnexion du terminal et sa reconnexion au réseau prioritaire de la liste.

Contrairement à la technique antérieure, le réseau domicile du terminal ne dépend pas d'une signalisation spécifique, telle qu'un SMS dont la livraison n'est pas garantie, pour communiquer au terminal une liste de réseaux visités préférés. La liste est insérée dans un échange requête-réponse relatif à la connexion du terminal à un premier réseau visité. Le réseau domicile reconnait la zone dans laquelle se trouve le terminal grâce à un identifiant, par exemple l'identifiant PLMN du premier réseau visité auquel le terminal demande de s'attacher, ou vient de s'attacher. Sur réception d'un message comprenant la liste, qui comprend un deuxième réseau visité, préféré au premier par le réseau domicile, le terminal peut prioriser ce deuxième réseau pour toute nouvelle connexion, tant qu'il est hors de portée de son réseau domicile, c'est-à-dire en itinérance.

Selon un aspect du procédé de connexion, la requête est une requête d'attachement du terminal à une station de base du réseau de la zone visitée.

Dans ce mode de réalisation, c'est une requête d'attachement au réseau visité qui déclenche la réception de la réponse comprenant la liste. L'entité de gestion de la mobilité dans la zone visitée émet par exemple une requête de mise à jour de la localisation du terminal, vers un serveur du réseau domicile, apte à gérer des droits et autorisations pour le terminal. La réponse à cette requête comprend la liste.

Selon un aspect du procédé de connexion, la requête est une requête de mise à jour de zone de suivi du terminal.

Dans ce mode de réalisation, c'est une requête de mise à jour de zone de suivi qui déclenche la réception de la réponse comprenant la liste. L'entité de gestion de la mobilité dans la zone visitée émet par exemple une requête de mise à jour de la localisation du terminal vers un serveur du réseau domicile, apte à gérer des droits et autorisations pour le terminal. La réponse à cette requête comprend la liste.

Selon un aspect du procédé de connexion, la liste est cryptée et décryptable avec une clé préalablement partagée entre le terminal et le réseau domicile.

Afin de garantir l'intégrité de la liste, et d'empêcher que le réseau visité ne modifie la liste à son profit, ou la supprime, cette liste peut être cryptée à l'aide d'une clé préalablement partagée entre le terminal et son réseau domicile, par exemple une clé de type Ki. Ainsi, si le terminal n'arrive pas à décrypter la liste, ou si la liste est absente du message de réponse attendu, il peut se déconnecter du réseau visité, et recommencer le procédé de connexion avec un réseau visité différent.

Les différents aspects du procédé de connexion qui viennent d'être décrits peuvent être mis en oeuvre indépendamment les uns des autres ou en combinaison les uns avec les autres.

L'invention concerne aussi un procédé de traitement d'une requête relative à la connexion d'un terminal hors de portée de son réseau domicile, à un réseau d'une zone visitée couverte par une pluralité de réseaux, le procédé comprenant:
- la réception de la requête
- l'obtention, d'une liste d'au moins un réseau de la pluralité, auquel doit se connecter en priorité le terminal,
- l'émission d'un message de réponse à la requête, comprenant la liste.

Lorsqu'un terminal est en itinérance, par exemple internationale, c'est-à-dire hors de portée de son réseau de domicile, il émet des requêtes vers une entité du réseau visité, afin d'une part de s'y attacher, puis d'autre part d'établir et éventuellement de modifier une session entre le terminal et une passerelle vers une entité distante fournissant une application.

Dans un premier exemple de requête initiale, le terminal émet vers une station de base de la zone visitée une requête d'attachement, qui est transmise par la station de base vers une entité de gestion de la mobilité dans la zone visitée.

Dans un deuxième exemple de requête initiale, le terminal, déjà attaché, émet vers la station de base de la zone visitée une requête de mise à jour de zone TAU (Tracking Area update), qui est transmise par la station de base vers l'entité de gestion de la mobilité.

Cette entité de gestion de la mobilité est par exemple un MME (Mobility Management Entity) si les réseaux en question sont 4G, et dans les deux cas, la requête initiale du terminal déclenche d'autres requêtes relatives à la connexion du terminal au réseau visité, qui sont émises par le MME du réseau visité vers le réseau de domicile. Une telle requête relative à la connexion du terminal au réseau visité est par exemple une requête de mise à jour de localisation ULR (Update Location Request), ou une requête de création de session CSR (Create Session Request).

Avantageusement, le réseau de domicile répond à cette requête en incluant dans le message de réponse une liste de réseaux préférés, sans utiliser de signalisation dédiée à cette liste, qui risquerait d'être détectée comme telle par le réseau visité, comme peut l'être par exemple le SMS dédié selon la technique antérieure.

Le fait d'inclure la liste de réseaux préférés va à l'encontre des préjugés de l'homme de métier, car cette liste est une information qui ne répond pas directement à la requête, mais qui sert à anticiper une connexion future du terminal dans la zone visitée.

En effet, sur réception de la liste, le terminal peut décider d'interrompre la connexion courante pour se connecter à un des réseaux de la liste, ou au contraire décider de rester connecté et d'attendre un autre événement pour se connecter à un des réseaux de la liste, comme par exemple la fin d'une session portée par la connexion courante, ou un changement de cellule à l'intérieur de la zone visitée.

De plus, le fait d'utiliser des messages existants de requête et réponse simplifie la mise en oeuvre du procédé dans des équipements existants. En l'occurrence, seul le message de réponse est légèrement modifié par rapport à l'existant, par l'ajout de la liste.

Selon un aspect du procédé de traitement, la requête est une requête d'attachement du terminal à une station de base (eNB) du réseau (vN-B) de la zone visitée.

Lorsque la requête initiale du terminal est une requête d'attachement, l'entité de gestion de la mobilité dans la zone visitée émet vers un serveur du réseau domicile, apte à gérer des droits et autorisations pour le terminal, une requête de mise à jour de la localisation du terminal. La réponse à cette requête comprend la liste.

Selon un aspect du procédé de traitement, la requête est une requête de mise à jour de zone de suivi du terminal.

Lorsque la requête initiale du terminal est une mise à jour de zone de suivi, l'entité de gestion de la mobilité dans la zone visitée émet vers un serveur du réseau domicile, apte à gérer des droits et autorisations pour le terminal, une requête de mise à jour de la localisation du terminal. La réponse à cette requête comprend la liste.

Selon un aspect du procédé de traitement, l'étape d'obtention est précédée d'une étape d'émission d'une requête de mise à jour de localisation du terminal.

Dans ce premier mode de réalisation, que la requête initiale du terminal soit une requête d'attachement ou une mise à jour de zone de suivi, l'entité de gestion de la mobilité dans la zone visitée utilise une requête de mise à jour de localisation du terminal pour obtenir la liste.

L'entité de gestion de la mobilité du réseau visité émet donc vers un serveur du réseau domicile, apte à gérer des droits et autorisations pour le terminal, une requête de mise à jour de la localisation du terminal.

Cette requête déclenche l'obtention de la liste par le serveur du réseau domicile, et son émission vers l'entité de gestion de la mobilité du réseau visité.

Par exemple, en 4G, une entité de gestion MME du réseau visité émet vers un serveur HSS du réseau domicile un message ULR. Ce message ULR comprend un paramètre permettant d'identifier la zone visitée, par exemple un paramètre Visited-PLMN-Id ayant la structure d'un paramètre PLMN (Public Land Mobile Network, ou réseau mobile terrestre public, en anglais).

Le serveur HSS obtient d'une base de données de l'opérateur domicile une liste de réseaux préférés de la zone visitée. Ces réseaux sont par exemple identifiés par leur PLMN. Le serveur HSS insère la liste dans un message ULA émis en réponse au message ULR.

A son tour, l'entité de gestion MME obtient la liste en l'extrayant du message ULA, et l'insère dans un message à destination du terminal, en réponse à la requête initiale du terminal.

En 5G, ce peut être une entité AMF (Access and Mobility Management Function, ou fonction de gestion de l'accès et de la mobilité, en anglais) du réseau visité qui émet vers un serveur UDM (Unified Data Management, ou gestion unifiée des données, en anglais) du réseau domicile un message de mise à jour de localisation du terminal.

Selon un aspect du procédé de traitement, l'étape d'obtention est précédée d'une étape d'émission d'une requête de création ou de modification de session.

Dans ce deuxième mode de réalisation, que la requête initiale du terminal soit une requête d'attachement ou une requête de mise à jour de zone, l'entité de gestion de la mobilité dans la zone visitée utilise, pour obtenir la liste, une requête de création ou de modification de session. Il s'agit ici d'une session, dite IP-CAN en 4G, entre le terminal et une passerelle d'accès à l'Internet, qui permet par exemple au terminal d'échanger des données avec un serveur d'application sur Internet.

L'entité de gestion de la mobilité du réseau visité émet donc vers une passerelle du réseau domicile une requête de création ou de modification de session.

Cette requête déclenche l'obtention de la liste et son émission, par la passerelle du réseau domicile.

A son tour, l'entité de gestion MME obtient la liste en l'extrayant du message émis par la passerelle, et l'insère dans un message à destination du terminal, en réponse à la requête initiale du terminal.

Par exemple, en 4G, une entité de gestion MME du réseau visité émet vers une passerelle PGW (à travers une SGW) du réseau domicile un message CSR. Ce message CSR comprend un paramètre permettant d'identifier la zone visitée, par exemple le paramètre "Serving Network" (réseau servant, en anglais).

La passerelle PGW obtient d'une entité PCRF de l'opérateur domicile une liste de réseaux de la zone visitée. Ces réseaux sont par exemple identifiés par leur PLMN.

En 5G, ce peut être une entité AMF du réseau visité qui émet vers une passerelle SMF (Session Management Function, ou fonction de gestion de session, en anglais) du réseau domicile (à travers une passerelle SMF de son propre réseau visité) un message pour créer ou modifier une session entre le terminal et la passerelle SMF du réseau domicile afin de joindre un serveur d'application.

On comprend donc que pour que le terminal reçoive la liste des réseaux visités préférés, le procédé de traitement qui vient d'être décrit est mis en oeuvre :
- soit dans l'entité de gestion de mobilité MME du réseau visité (premier mode de réalisation),
- soit dans l'entité de gestion de mobilité MME du réseau visité et dans la passerelle PGW du réseau domicile (deuxième mode de réalisation).

L'invention concerne aussi un dispositif de connexion d'un terminal hors de portée de son réseau domicile, à un réseau d'une zone visitée couverte par une pluralité de réseaux, le procédé comprenant:
- un émetteur configuré pour émettre une requête relative à la connexion,
- un récepteur configuré pour recevoir un message de réponse à la requête, comprenant une liste d'au moins un réseau de la pluralité, auquel doit se connecter en priorité le terminal,
- un processeur configuré pour déconnecter le terminal et le reconnecter au réseau prioritaire de la liste.

Ce dispositif, qui met en oeuvre dans tous ses modes de réalisation le procédé de connexion qui vient d'être décrit, est compris dans un terminal mobile.

L'invention concerne aussi un dispositif de traitement d'une requête relative à la connexion d'un terminal hors de portée de son réseau domicile, à un réseau d'une zone visitée couverte par une pluralité de réseaux, le dispositif comprenant:
- un récepteur configuré pour recevoir la requête
- un processeur configuré pour obtenir, sur la base de l'identifiant, une liste d'au moins un réseau de la pluralité, auquel doit se connecter en priorité le terminal,
- un émetteur d'un message de réponse à la requête, comprenant la liste.

Ce dispositif, qui met en oeuvre dans tous ses modes de réalisation le procédé de traitement qui vient d'être décrit, peut être compris dans une entité de gestion MME, ou dans une passerelle PGW entre réseau mobile terrestre et un réseau de commutation par paquets PDN, tel que l'Internet.

Si le réseau mobile terrestre est 5G, le dispositif peut être compris dans une entité AMF, ou dans une passerelle SMF.

L'invention concerne aussi un système de traitement d'une requête relative à la connexion d'un terminal hors de portée de son réseau domicile, à un réseau d'une zone visitée couverte par une pluralité de réseaux, le système comprenant:
- la pluralité de réseaux de la zone visitée,
- le réseau domicile,
- au moins un terminal mobile comprenant un dispositif de connexion tel que celui qui vient d'être décrit,
- au moins une entité de gestion de mobilité du réseau visité, comprenant un dispositif de traitement tel que celui qui vient d'être décrit.

Selon un aspect du système de traitement, il peut également comprendre au moins une passerelle du réseau domicile comprenant un dispositif de traitement tel que celui qui vient d'être décrit.

L'invention concerne aussi un programme d'ordinateur comprenant des instructions pour la mise en oeuvre des étapes du procédé de connexion qui vient d'être décrit, lorsque ce programme est exécuté par un processeur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention concerne aussi un programme d'ordinateur comprenant des instructions pour la mise en œuvre des étapes du procédé de traitement qui vient d'être décrit, lorsque ce programme est exécuté par un processeur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

### 4. Présentation des figures

D'autres avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
- la figure 1 présente une vue d'ensemble des éléments d'architecture permettant la mise en œuvre du procédé de traitement proposé,
- la figure 2 présente un exemple de mise en œuvre du procédé de connexion et du procédé de traitement d'une requête relative à la connexion d'un terminal en itinérance, selon un premier mode de réalisation,
- la figure 3 présente un exemple de mise en œuvre du procédé de connexion et du procédé de traitement d'une requête relative à la connexion d'un terminal en itinérance, selon un deuxième mode de réalisation,

- la figure 4 présente un exemple de structure d'un dispositif de connexion d'un terminal en itinérance, selon un aspect de l'invention,
- la figure 5 présente un exemple de structure d'un dispositif de traitement d'une requête relative à la connexion d'un terminal en itinérance, selon un aspect de l'invention.

### 5. Description détaillée d'au moins un mode de réalisation de l'invention

Dans la suite de la description, on présente des exemples de plusieurs modes de réalisation se basant sur une architecture 4G de réseau mobile, mais l'invention s'applique également à d'autres architectures antérieures ou à venir, telle que par exemple une architecture 5G.

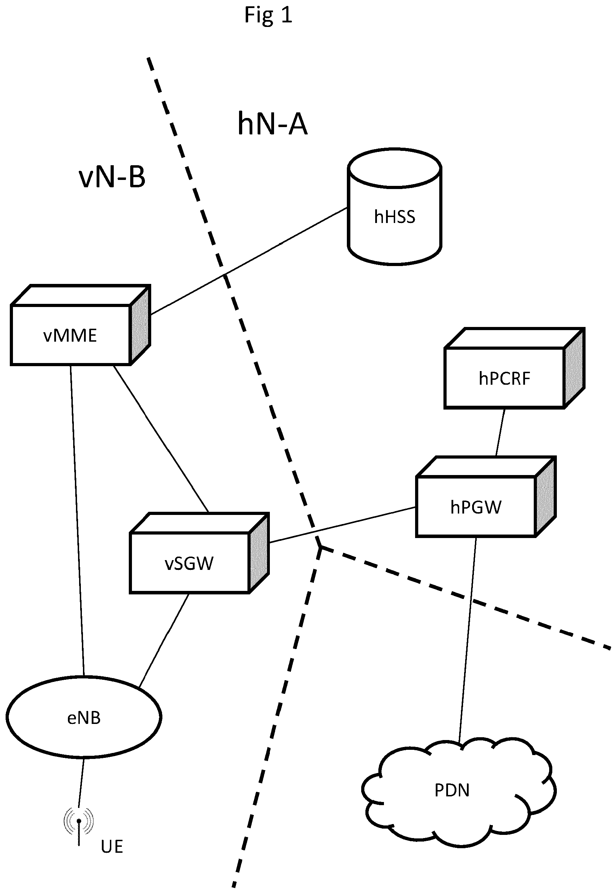

La **figure 1** présente une vue d'ensemble des éléments d'architecture permettant la mise en œuvre du procédé de traitement proposé.

Des accords d'itinérance entre opérateurs permettent à un terminal hors de portée de son réseau domicile de se connecter, lorsqu'il est à portée d'au moins un réseau visité.

Plus précisément, lorsque le terminal UE, dont le réseau domicile est le réseau hN-A, est en itinérance dans une zone visitée couverte au moins partiellement par un réseau visité vN-B, et qu'il s'attache à une station de base eNB du réseau visité vN-B, l'entité de gestion de mobilité vMME du réseau visité vN-B authentifie le terminal UE en interrogeant la base de données hHSS du réseau domicile hN-A. La nouvelle localisation du terminal UE est aussi communiquée à un serveur de registres hHSS du réseau domicile hN-A, afin que le terminal UE puisse être localisé par son réseau domicile, par exemple pour des appels entrants.

Ensuite, une session, dite IP-CAN, est établie pour le terminal UE par la passerelle hPGW du réseau domicile hN-A, au travers d'au moins une passerelle vSWG du réseau visité vN-B. Les caractéristiques de cette session sont déterminées par la fonction hPCRF du réseau domicile hN-A, et sont communiquées au terminal UE. Par simplicité, une seule passerelle est illustrée entre le terminal UE en itinérance dans le réseau visité vN-B et la passerelle hPGW du réseau domicile hN-A, mais plusieurs peuvent être nécessaires.

La session IP-CAN ainsi établie permet au terminal UE d'échanger des données avec n'importe quelle entité dans un réseau à commutation de paquets PDN, tel que par exemple le réseau Internet, auquel est connectée la passerelle hPGW du réseau domicile hN-A.

La zone visitée peut également être au moins partiellement couverte par au moins un autre réseau mobile terrestre vN-C, non illustré. Le réseau domicile hN-A peut chercher à équilibrer, en terme de volume ou en terme de coût, l'ensemble de trafic avec les réseaux de la zone visitée. Pour ce faire, il doit pouvoir informer le terminal sur quel réseau visité est préférable.

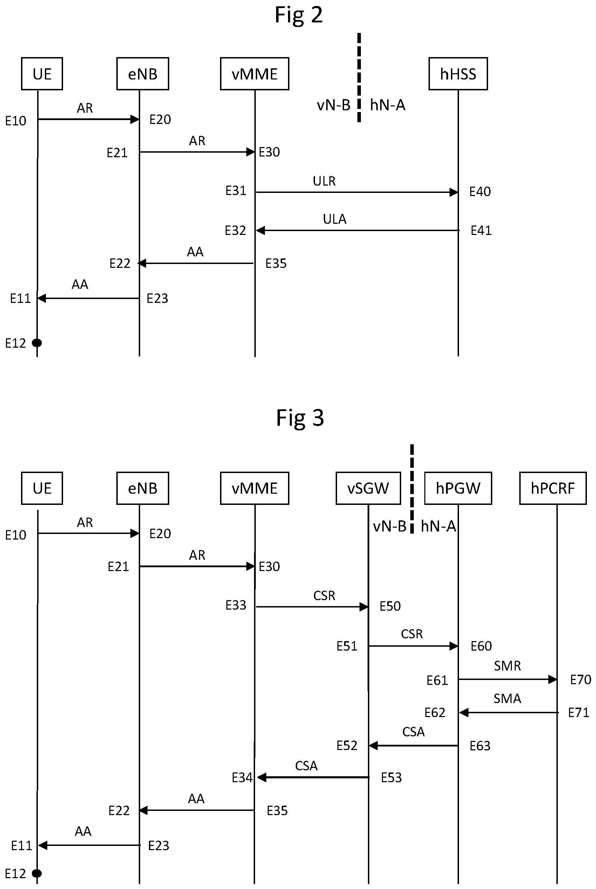

La **figure 2** présente un exemple de mise en oeuvre du procédé de connexion et du procédé de traitement d'une requête relative à la connexion d'un terminal en itinérance, selon un premier mode de réalisation.

Dans ce premier mode de réalisation, une liste de réseaux visités préférés est fournie au terminal par le réseau domicile pendant la phase de mise à jour de la localisation du terminal.

De façon connue, lors d'une étape E10, le terminal UE émet vers la station de base eNB une requête d'attachement AR. La station de base eNB la reçoit lors d'une étape E20 et émet lors d'une étape E21 une requête similaire vers l'entité de gestion de mobilité vMME, qui la reçoit lors d'une étape E30. D'autres échanges, non illustrés, ont ensuite lieu, également de façon connue, où le réseau visité vérifie et authentifie auprès du réseau domicile l'identité du terminal UE.

Lors d'une étape E31, une fois le terminal UE authentifié, l'entité de gestion de mobilité vMME émet vers le serveur hHSS du réseau domicile hN-A une requête ULR (Update Location Request, ou requête de mise à jour de localisation, en anglais) de mise à jour de localisation, de façon connue, par exemple en utilisant le protocole Diameter.

Lors d'une étape E40, le serveur hHSS reçoit la requête ULR et effectue des opérations de mise à jour habituelles, par exemple auprès d'une entité de gestion de mobilité du réseau domicile hN-A, non illustrée.

De façon nouvelle, lors d'une étape E41, le serveur hHSS ajoute au message d'acquittement ULA (Update Location Acknowledgement, ou acquittement de mise à jour de localisation, en anglais) de la requête ULR une liste L des réseaux qui sont préférés, au moment de l'étape E41, par le réseau hN-A, et émet vers l'entité de gestion de mobilité vMME le message d'acquittement ULA, par exemple en utilisant le protocole Diameter. Si ce n'est pas le serveur hHSS qui détient la liste L correcte, il l'obtient par exemple sur demande à une entité dite de "roaming steering" (guidage d'itinérance, en anglais) du réseau hN-A.

Cette liste L est de préférence limitée aux réseaux qui couvrent la zone indiquée dans la requête ULR, zone dans laquelle se trouve le terminal UE. A chacun des réseaux de la liste L peut être associé un poids indiquant un ordre de préférence. Alternativement, le liste L peut ne contenir qu'un seul réseau préféré.

La liste L peut par exemple être incluse dans un nouveau champ du message ULA, ainsi que l'autorise le protocole Diameter.

La liste L peut prendre la forme d'un tableau sérialisé avec au moins un identifiant de réseau PLMN, éventuellement accompagné d'un coefficient de pondération représentant sa priorité relative aux autres identifiants PLMN de la liste; un identifiant PLMN peut par exemple être composé des codes MCC (Mobile Country Code, ou code pays mobile, en anglais) et MNC (Mobile Network Code, ou code de réseau mobile, en anglais) du réseau; éventuellement d'autres indications peuvent accompagner chaque PLMN, telles que les technologies présentes: 2G, 3G, 4G, 5G, WiFi, etc.

Lors d'une étape E32, l'entité de gestion de mobilité vMME reçoit l'acquittement ULA comprenant la liste L de réseaux préférés, et mémorise éventuellement cette liste L si cela est nécessaire pour l'ajouter à un autre message émis par l'entité de gestion de mobilité vMME.

Lors d'une étape E35, l'entité de gestion de mobilité vMME répond à la demande initiale d'attachement AR du terminal UE par un message AA auquel est ajoutée la liste L. Par exemple, le champ PCO (Protocol Configuration Option, ou option de configuration de protocole, en anglais) du message AA peut être utilisé.

Lors d'une étape E22, la station de base eNB reçoit ce message de réponse AA, et le transmet lors d'une étape E23 au terminal UE.

Lors d'une étape E11, le terminal UE reçoit le message AA comprenant la liste L de réseaux préférés, et mémorise cette liste L. Cette liste L comprend par exemple l'identifiant d'un réseau vN-C, indiqué comme prioritaire sur le réseau vN-B.

Lors d'une étape E12, par exemple dès que le terminal UE détecte qu'il est sous la couverture du réseau vN-C préféré au réseau vN-B par le réseau domicile hN-A, le terminal UE se déconnecte du réseau vN-B et entame une procédure de connexion au réseau vN-C, en s'attachant à une station de base de ce réseau.

Lors d'une étape E12 alternative, la procédure de connexion au réseau vN-C peut attendre que le besoin apparaisse, par exemple si le terminal UE s'est détaché de la station de base eNB du réseau vN-B pour une raison quelconque, et s'il doit se reconnecter, le terminal UE entame alors une procédure de connexion au réseau visité vN-C plutôt que vN-B.

La **figure 3** présente un exemple de mise en oeuvre du procédé de connexion et du procédé de traitement d'une requête relative à la connexion d'un terminal en itinérance, selon un deuxième mode de réalisation.

Dans ce deuxième mode de réalisation, une liste de réseaux visités préférés est fournie au terminal par le réseau domicile pendant la phase d'établissement de la session IP-CAN.

Les étapes E10, E20, E21 et E30 sont identiques au premier mode de réalisation et ne sont pas décrites à nouveau.

Les étapes E31, E32, E40 et E41 du premier mode sont remplacées dans ce deuxième mode par les étapes ci-dessous.

Lors d'une étape E33, une fois le terminal UE authentifié et sa localisation mise à jour, selon la technique antérieure, auprès du réseau domicile hN-A, l'entité de gestion de mobilité vMME émet vers la passerelle hPGW du réseau domicile hN-A une requête CSR (Create Session Request, ou requête de création de session, en anglais) de création de session IP-CAN, de façon connue, par exemple en utilisant le protocole GTPv2.

Cette requête CSR est reçue lors d'une étape E50 par une passerelle vSWG du réseau visité vN-B, qui la transmet lors d'une étape E51 vers la passerelle hPGW du réseau domicile hN-A, de façon connue.

Lors d'une étape E60, la passerelle hPGW reçoit la requête CSR.

Lors d'une étape E61, la passerelle hPGW interroge avec un message SMR la fonction hPCRF du réseau domicile hN-A pour connaître les caractéristiques qui doivent être attribuées à la session IP-CAN demandée, aussi appelées "PCC rules".

Lors d'une étape E70, la fonction hPCRF reçoit le message SMR, et lors d'une étape E71, de façon nouvelle, elle émet vers la passerelle hPGW un message SMA comprenant, en plus des "PCC rules", une liste L des réseaux qui sont préférés, au moment de l'étape E71, par le réseau hN-A. Si ce n'est pas la fonction hPCRF qui détient la liste L correcte, elle l'obtient par exemple sur demande à une entité de "roaming steering" du réseau hN-A.

Lors d'une étape E62, la passerelle hPGW reçoit le message SMA comprenant la liste L de réseaux préférés, et mémorise cette liste L.

Lors d'une étape E63, la passerelle hPGW répond à la requête initiale CSR de création de session IP-CAN par un message CSA (Create Session Response, ou réponse de création de session, en anglais) auquel est ajoutée la liste L. Par exemple, le champ PCO du message CSA peut être utilisé.

Cette réponse CSA est reçue lors d'une étape E52 par une passerelle vSWG du réseau visité vN-B, qui la transmet lors d'une étape E53 vers l'entité de gestion de mobilité vMME du réseau visité vN-B.

Lors d'une étape E34, l'entité de gestion de mobilité vMME reçoit la réponse CSA comprenant la liste L de réseaux préférés, et mémorise cette liste L.

Les étapes suivantes, E35, E22, E23, E11 et E12 sont identiques au premier mode de réalisation et ne sont pas décrites à nouveau.

Selon ces deux premiers modes de réalisation, la liste L est fournie au terminal UE dans le contexte d'une procédure d'attachement à une station de base.

Selon d'autres modes de réalisation non illustrés, la liste L est fournie au terminal UE de la même façon, mais dans le contexte d'une mise à jour de zone de suivi, aussi appelée TAU, pour "Tracking Area Update" en anglais, alors que le terminal UE est déjà attaché à la station de base.

Dans les deux contextes, que ce soit celui d'une requête d'attachement ou d'une requête TAU, le procédé proposé comprend bien la réception d'une requête relative à la connexion du terminal lorsqu'il est hors de portée de son réseau domicile, par l'entité de gestion de mobilité du réseau visité (étape E30) dans le cas du premier mode de réalisation décrit, ou, dans le cas du deuxième mode, par l'entité de gestion de mobilité du réseau visité (étape E30) puis par la passerelle PGW du réseau domicile (étape E60).

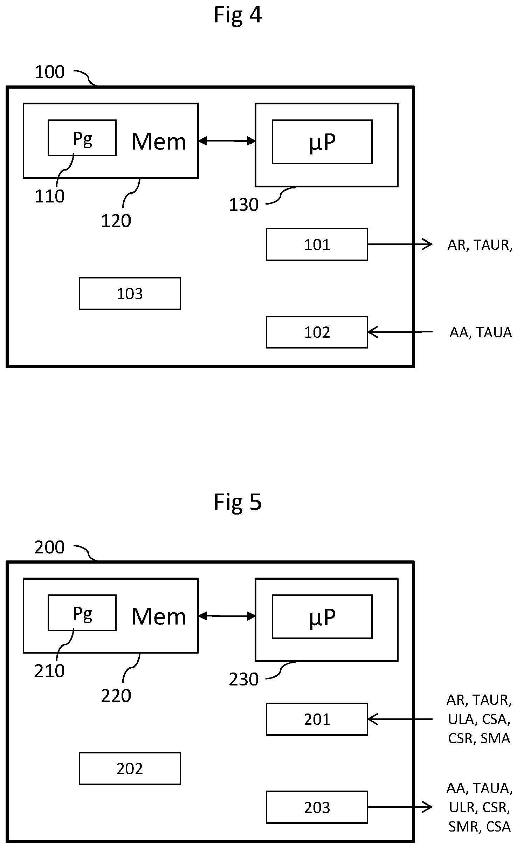

En relation avec la **figure 4** on présente maintenant un exemple de structure d'un dispositif de connexion d'un terminal hors de portée de son réseau domicile (en itinérance), selon un aspect de l'invention.

Le dispositif 100 de connexion met en oeuvre le procédé de connexion d'un terminal en itinérance, dont différents modes de réalisation viennent d'être décrits.

Un tel dispositif 100 est mis en oeuvre dans un terminal mobile apte à se connecter à un réseau mobile terrestre, par exemple de type 4G ou 5G.

Par exemple, le dispositif 100 comprend une unité de traitement 130, équipée par exemple d'un microprocesseur µP, et pilotée par un programme d'ordinateur 110, stocké dans une mémoire 120 et mettant en oeuvre le procédé de connexion selon l'invention. A l'initialisation, les instructions de code du programme d'ordinateur 110 sont par exemple chargées dans une mémoire RAM, avant d'être exécutées par le processeur de l'unité de traitement 130.

Une telle mémoire 120 et un tel processeur de l'unité de traitement 130 sont configurés pour commander :
- un module 103 de déconnexion et de reconnexion du terminal au réseau prioritaire compris dans une liste d'au moins un réseau mobile terrestre, auquel doit se connecter en priorité le terminal lorsqu'il est en itinérance.

Le dispositif 100 comprend également :
- un émetteur 101, apte à émettre une requête AR d'attachement, ou un message TAUR de mise à jour de zone de suivi,
- un récepteur 102, apte à recevoir une réponse AA d'attachement, ou un message TAUA d'acquittement de mise à jour de zone de suivi.

En relation avec la **figure 5** on présente maintenant un exemple de structure d'un dispositif de traitement d'une requête relative à la connexion d'un terminal hors de portée de son réseau domicile (en itinérance), selon un aspect de l'invention.

Le dispositif 200 de traitement met en oeuvre le procédé de traitement d'une requête relative à la connexion d'un terminal en itinérance, dont différents modes de réalisation viennent d'être décrits.

Un tel dispositif 200 peut être mis en oeuvre dans une entité de gestion de mobilité d'un réseau mobile terrestre, apte à gérer la localisation des terminaux présents dans sa couverture, telle qu'une entité MME, dans un réseau 4G. Le dispositif 200 peut également être mis en oeuvre dans une passerelle faisant l'interface entre un réseau mobile terrestre et l'Internet, telle qu'une passerelle PGW, dans un réseau 4G.

Par exemple, le dispositif 200 comprend une unité de traitement 230, équipée par exemple d'un microprocesseur µP, et pilotée par un programme d'ordinateur 210, stocké dans une mémoire 220 et mettant en oeuvre le procédé de traitement selon l'invention. A l'initialisation, les instructions de code du programme d'ordinateur 210 sont par exemple chargées dans une mémoire RAM, avant d'être exécutées par le processeur de l'unité de traitement 230.

Une telle mémoire 220 et un tel processeur de l'unité de traitement 230 sont configurés pour commander :
- un module 202 d'obtention, apte à obtenir, sur la base d'un identifiant relatif à la zone visitée par le terminal en itinérance, une liste d'au moins un réseau mobile terrestre de la zone, auquel doit se connecter en priorité le terminal.

Le dispositif 200 comprend également :
- un récepteur 201, apte à recevoir une requête AR d'attachement, ou un message TAUR de mise à jour de zone de suivi, ou une réponse ULA de mise à jour de localisation, ou une réponse CSA de création ou modification de session, ou une requête CSR de création ou modification de session (d'une passerelle SGW vers une passerelle PGW), ou un message SMA de "PCC rules" (d'une fonction PCRF vers une passerelle PGW),
- un émetteur 203, apte à émettre une réponse AA d'attachement, ou un message TAUA d'acquittement de mise à jour de zone de suivi, ou une mise à jour ULR de localisation, ou une requête CSR de création ou modification de session, ou un message SMR de requête de "PCC rules" (d'une passerelle PGW vers une fonction PCRF), ou une réponse CSA de création ou modification de session.

Les modules, récepteurs ou émetteurs, décrits en relation avec les figure 4 et 5 peuvent être matériels ou logiciels.

Les figures 4 et 5 illustrent seulement une manière particulière, parmi plusieurs possibles, de réaliser les algorithmes détaillés ci-dessus, en relation avec les figures 2 et 3. En effet, les procédés proposés se réalisent indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où les procédés proposés sont implantés sur une machine de calcul reprogrammable, le ou les programmes correspondants (c'est-à-dire les séquences d'instructions) pourront être stocké dans des média de stockage amovibles (tel que par exemple une disquette, un CD-ROM ou un DVD-ROM) ou non, ces média de stockage étant lisibles partiellement ou totalement par un ordinateur ou un processeur.

## Revendications

1. **Procédé** de connexion d'un terminal (UE) hors de portée de son réseau domicile (hN-A), à un réseau (vN-B) d'une zone visitée couverte par une pluralité de réseaux, le procédé comprenant:
• l'émission (E10) d'une requête (AR, TAUR) relative à la connexion,
• la réception (E11) d'un message (AA, TAUA) de réponse à la requête, comprenant une liste d'au moins un réseau de la pluralité, auquel doit se connecter en priorité le terminal,
• la déconnexion du terminal et sa connexion (E12) à un réseau de la liste.

2. **Procédé** de connexion selon la revendication 1, où la requête est une requête (AR) d'attachement du terminal à une station de base (eNB) du réseau (vN-B) de la zone visitée.

3. **Procédé** de connexion selon la revendication 1, où la requête est une requête (TAUR) de mise à jour de zone de suivi du terminal.

4. **Procédé** de connexion selon l'une des revendications précédentes, où la liste est cryptée et décryptable avec une clé préalablement partagée entre le terminal et le réseau domicile.

5. **Procédé** de traitement d'une requête relative à la connexion d'un terminal (UE) hors de portée de son réseau domicile (hN-A), à un réseau (vN-B) d'une zone visitée couverte par une pluralité de réseaux, le procédé comprenant:
• la réception (E30) de la requête,
• l'obtention (E32, E62, E34), sur la base d'un identifiant relatif à la zone visitée, d'une liste d'au moins un réseau de la pluralité, auquel doit se connecter en priorité le terminal,
• l'émission (E35, E63) d'un message de réponse à la requête, comprenant la liste.

6. **Procédé** de traitement selon la revendication 5, où la requête est une requête (AR) d'attachement du terminal à une station de base (eNB) du réseau (vN-B) de la zone visitée.

7. **Procédé** de traitement selon la revendication 5, où la requête est une requête (TAUR) de mise à jour de zone de suivi du terminal.

8. **Procédé** de traitement selon l'une des revendications 6 ou 7, où l'étape d'obtention (E32) est précédée d'une étape (E31) d'émission d'une requête (ULR) de mise à jour de localisation du terminal.

9. **Procédé** de traitement selon la revendication 5, où l'étape d'obtention (E62, E34) est précédée d'une étape (E61, E33) d'émission d'une requête (SMR, CSR) de création ou de modification de session.

10. **Dispositif** de connexion d'un terminal (UE) hors de portée de son réseau domicile (hN-A), à un réseau (vN-B) d'une zone visitée couverte par une pluralité de réseaux, le dispositif comprenant:
• un émetteur (101) configuré pour émettre une requête (AR, TAUR) relative à la connexion,
• un récepteur (102) configuré pour recevoir un message (AA, TAUA) de réponse à la requête, comprenant une liste d'au moins un réseau de la pluralité, auquel doit se connecter en priorité le terminal,
• un processeur (130, 103) configuré pour déconnecter le terminal et le connecter à un réseau de la liste.

11. **Dispositif** de traitement d'une requête relative à la connexion d'un terminal hors de portée de son réseau domicile, à un réseau d'une zone visitée couverte par une pluralité de réseaux, le dispositif comprenant:
• un récepteur (201) configuré pour recevoir la requête,
• un processeur (230, 202) configuré pour obtenir, sur la base d'un identifiant relatif à la zone visitée, une liste d'au moins un réseau de la pluralité, auquel doit se connecter en priorité le terminal,
• un émetteur (203) d'un message de réponse à la requête, comprenant la liste.

12. **Système** de traitement d'une requête relative à la connexion d'un terminal (UE) hors de portée de son réseau domicile (hN-A), à un réseau (vN-B) d'une zone visitée couverte par une pluralité de réseaux, le système comprenant:
• la pluralité de réseaux de la zone visitée,
• le réseau domicile,
• au moins un terminal mobile (UE) comprenant un dispositif de connexion selon la revendication 10,
• au moins une entité de gestion de mobilité (vMME) du réseau visité (vN-B), comprenant un dispositif de traitement selon la revendication 11.

13. **Système** de traitement selon la revendication 12 comprenant en outre :
• au moins une passerelle (hPGW) du réseau domicile (hN-A), comprenant un dispositif selon la revendication 11.

14. **Programme d'ordinateur,** comprenant des instructions pour la mise en oeuvre des étapes du procédé de connexion selon la revendication 1, lorsque ce programme est exécuté par un processeur.

15. **Programme d'ordinateur,** comprenant des instructions pour la mise en oeuvre des étapes du procédé de traitement selon la revendication 5, lorsque ce programme est exécuté par un processeur.

## Patentansprüche

1. Verfahren zum Einbuchen eines Endgeräts (UE) außerhalb der Reichweite seines Heimatnetzes (hN-A) in ein Netz (vN-B) eines besuchten Gebiets, das von einer Mehrzahl von Netzen abgedeckt wird, wobei das Verfahren Folgendes umfasst:
• das Senden (E10) einer Anforderung (AR, TAUR) bezüglich des Einbuchens,
• das Empfangen (E11) einer Antwortnachricht (AA, TAUA) auf die Anforderung, die eine Liste mit mindestens einem Netz der Mehrzahl umfasst, in das sich das Endgerät vorrangig einbuchen soll,
• das Ausbuchen des Endgeräts und sein Einbuchen (E12) in ein Netz aus der Liste.

2. Verfahren zum Einbuchen nach Anspruch 1, bei dem die Anforderung eine Anforderung (AR) des Verbindens des Endgeräts mit einer Basisstation (eNB) des Netzes (vN-B) des besuchten Gebiets ist.

3. Verfahren zum Einbuchen nach Anspruch 1, bei dem die Anforderung eine Anforderung (TAUR) der Aktualisierung des Trackinggebiets des Endgeräts ist.

4. Verfahren zum Einbuchen nach einem der vorhergehenden Ansprüche, bei dem die Liste mit einem Schlüssel, der zuvor zwischen dem Endgerät und dem Heimatnetz geteilt wurde, verschlüsselt und entschlüsselbar ist.

5. Verfahren zur Verarbeitung einer Anforderung bezüglich des Einbuchens eines Endgeräts (UE) außerhalb der Reichweite seines Heimatnetzes (hN-A) in ein Netz (vN-B) eines besuchten Gebiets, das von einer Mehrzahl von Netzen abgedeckt wird, wobei das Verfahren Folgendes umfasst:
• das Empfangen (E30) der Anforderung,
• das Erhalten (E32, E62, E34), auf der Grundlage einer Kennung bezüglich des besuchten Gebiets, einer Liste mit mindestens einem Netz der Mehrzahl, in das sich das Endgerät vorrangig einbuchen soll,
• das Senden (E35, E63) einer Antwortnachricht auf die Anforderung, welche die Liste umfasst.

6. Verfahren zur Verarbeitung nach Anspruch 5, bei dem die Anforderung eine Anforderung (AR) des Verbindens des Endgeräts mit einer Basisstation (eNB) des Netzes (vN-B) des besuchten Gebiets ist.

7. Verfahren zur Verarbeitung nach Anspruch 5, wobei die Anforderung eine Anforderung (TAUR) der Aktualisierung des Trackinggebiets des Endgeräts ist.

8. Verfahren zur Verarbeitung nach einem der Ansprüche 6 oder 7, bei welchem dem Schritt des Erhaltens (E32) ein Schritt (E31) des Sendens einer Anforderung (ULR) zur Aktualisierung der Lokalisierung des Endgeräts vorausgeht.

9. Verfahren zur Verarbeitung nach Anspruch 5, bei welchem dem Schritt des Erhaltens (E62, E34) ein Schritt (E61, E33) des Sendens einer Anforderung (SMR, CSR) zum Einrichten oder Ändern der Sitzung ist.

10. Vorrichtung zum Einbuchen eines Endgeräts (UE) außerhalb der Reichweite seines Heimatnetzes (hN-A) in ein Netz (vN-B) eines besuchten Gebiets, das von einer Mehrzahl von Netzen abgedeckt wird, wobei die Vorrichtung Folgendes umfasst:
• einen Sender (101), der dazu ausgestaltet ist, eine Anforderung (AR, TAUR) bezüglich des Einbuchens zu senden,
• einen Empfänger (102), der dazu ausgestaltet ist, eine Antwortnachricht (AA, TAUA) auf die Anforderung zu empfangen, die eine Liste mit mindestens einem Netz der Mehrzahl umfasst, in das sich das Endgerät vorrangig einbuchen soll,
• einen Prozessor (130, 103), der dazu ausgestaltet ist, das Endgerät auszubuchen und in ein Netz aus der Liste einzubuchen.

11. Vorrichtung zur Verarbeitung einer Anforderung bezüglich des Einbuchens eines Endgeräts außerhalb der Reichweite seines Heimatnetzes in ein Netz eines besuchten Gebiets, das von einer Mehrzahl von Netzen abgedeckt wird, wobei die Vorrichtung Folgendes umfasst:
• einen Empfänger (201), der dazu ausgestaltet ist, eine Anforderung zu empfangen,
• einen Prozessor (230, 202), der dazu ausgestaltet ist, auf der Grundlage einer Kennung bezüglich des besuchten Gebiets, eine Liste mit mindestens einem Netz der Mehrzahl zu erhalten, in das sich das Endgerät vorrangig einbuchen soll,
• einen Sender (203) einer Antwortnachricht auf die Anforderung, welche die Liste umfasst.

12. System zur Verarbeitung einer Anforderung bezüglich des Einbuchens eines Endgeräts (UE) außerhalb der Reichweite seines Heimatnetzes (hN-A) in ein Netz (vN-B) eines besuchten Gebiets, das von einer Mehrzahl von Netzen abgedeckt wird, wobei das System Folgendes umfasst:
• die Mehrzahl von Netzen des besuchten Gebiets,
• das Heimatnetz,
• mindestens ein mobiles Endgerät (UE), das eine Vorrichtung zum Einbuchen nach Anspruch 10 umfasst,
• mindestens eine Mobilitätsverwaltungsentität (vMME) des besuchten Netzes (vN-B), die eine Verarbeitungsvorrichtung nach Anspruch 11 umfasst.

13. Verarbeitungssystem nach Anspruch 12, das ferner Folgendes umfasst:
• mindestens ein Gateway (hPGW) des Heimatnetzes (hN-A), das eine Vorrichtung nach Anspruch 11 umfasst.

14. Computerprogramm, das Befehle umfasst, die bei der Ausführung dieses Programms durch einen Prozessor die Schritte des Verfahrens zum Einbuchen nach Anspruch 1 ausführen.

15. Computerprogramm, das Befehle umfasst, die bei der Ausführung des Programms durch einen Prozessor die Schritte des Verarbeitungsverfahrens nach Anspruch 5 ausführen.

## Claims

1. **Method** of connecting a terminal (UE) beyond the range of its home network (hN-A), to a network (vN-B) of a visited area covered by a plurality of networks, the method comprising:
• the sending (E10) of a request (AR, TAUR) relating to the connection,
• the receipt (E11) of a message (AA, TAUA) of response to the request, comprising a list of at least one network of the plurality, to which the terminal must connect by priority,
• the disconnection of the terminal and its connection (E12) to a network of the list.

2. Connection **method** according to Claim 1, where the request is a request (AR) for attachment of the terminal to a base station (eNB) of the network (vN-B) of the visited area.

3. Connection **method** according to Claim 1, where the request is a request (TAUR) for tracking area updating of the terminal.

4. Connection **method** according to one of the preceding claims, where the list is encrypted and decryptable with a key previously shared between the terminal and the home network.

5. **Method** of processing a request relating to the connection of a terminal (UE) beyond the range of its home network (hN-A), to a network (vN-B) of a visited area covered by a plurality of networks, the method comprising:
• the receipt (E30) of the request,
• the obtaining (E32, E62, E34), on the basis of an identifier relating to the visited area, of a list of at least one network of the plurality, to which the terminal must connect by priority,
• the sending (E35, E63) of a message of response to the request, comprising the list.

6. Processing **method** according to Claim 5, where the request is a request (AR) for attachment of the terminal to a base station (eNB) of the network (vN-B) of the visited area.

7. Processing **method** according to Claim 5, where the request is a request (TAUR) for tracking area updating of the terminal.

8. Processing **method** according to either of Claims 6 and 7, where the obtaining step (E32) is preceded by a step (E31) of sending a request (ULR) for location updating of the terminal.

9. Processing **method** according to Claim 5, where the obtaining step (E62, E34) is preceded by a step (E61, E33) of sending a request (SMR, CSR) for session creation or modification.

10. **Device** for connecting a terminal (UE) beyond the range of its home network (hN-A), to a network (vN-B) of a visited area covered by a plurality of networks, the device comprising:
• a sender (101) configured to send a request (AR, TAUR) relating to the connection,
• a receiver (102) configured to receive a message (AA, TAUA) of response to the request, comprising a list of at least one network of the plurality, to which the terminal must connect by priority,
• a processor (130, 103) configured to disconnect the terminal and connect it to a network of the list.

11. **Device** for processing a request relating to the connection of a terminal beyond the range of its home network, to a network of a visited area covered by a plurality of networks, the device comprising:
• a receiver (201) configured to receive the request,
• a processor (230, 202) configured to obtain, on the basis of an identifier relating to the visited area, a list of at least one network of the plurality, to which the terminal must connect by priority,
• a sender (203) of a message of response to the request, comprising the list.

12. **System** for processing a request relating to the connection of a terminal (UE) beyond the range of its home network (hN-A), to a network (vN-B) of a visited area covered by a plurality of networks, the system comprising:
• the plurality of networks of the visited area,
• the home network,
• at least one mobile terminal (UE) comprising a connection device according to Claim 10,
• at least one mobility management entity (vMME) of the visited network (vN-B), comprising a processing device according to Claim 11.

13. Processing **system** according to Claim 12 furthermore comprising:
• at least one gateway (hPGW) of the home network (hN-A), comprising a device according to Claim 11.

14. **Computer program,** comprising instructions for the implementation of the steps of the connection method according to Claim 1, when this program is executed by a processor.

15. **Computer program,** comprising instructions for the implementation of the steps of the processing method according to Claim 5, when this program is executed by a processor.
